# EUROPEAN PATENT APPLICATION

(11) **EP 0 788 825 A1**
(43) Date of publication of application: **13.08.1997**
(21) Application number: 97101941.9
(22) Date of filing: 07.02.1997
(51) Int. Cl.: B01D 33/073, B01D 33/46

(54) **Filtering device for turbid water purification**

(30) Priority: 08.02.1996 IT VA960002
(71) Applicant: RENI-CIRILLO S.r.l., I-20061 Carugate MI (IT)
(72) Inventor: Reni, Mario, 20061 Carugate MI (IT); Reni, Cesare, 20061 Carugate MI (IT)

(57) **Abstract**

A filtering device is described for the purification of turbid water, said device consisting of a rotating drum filter, said rotating drum being covered by a sheet of fossil flour; the lower part of said rotating drum is plunged into the aqueous solution to be purified which is filtered through the fossil flour while its upper part is contacted with a scraping blade which eliminates a variable amount of the fossil flour on which impurities have been deposited of the filtered solution; said amount of fossil flour to be eliminated is controlled by a capacitative device measuring the flow of water filtered by the rotating drum filter.

## Description

The present invention relates to a filtering device for the purification of turbid water.

Particularly, said filtering device is substantially composed by a rotating drum, the lower part of which is plunged into the suspension to be treated while its upper part is in contact with a scraping blade to eliminate a part of the filter bed which has been deposited on said filtering device.

In the mechanical industry, and particularly in that part which is concerned with the mass production of metal small parts, the mass finishing of the parts after their machining is very often carried out by means of vibratory equipment.

The market offers vibrating machines allowing to obtain high quality finishing degrees on metal parts with various shape and size and, in particular, slight rounding off, roughness reduction and surface polishing.

These operations are controlled by adjusting the frequency of the vibrations, the composition of the pocessing media, the geometrical shape of the same and the possible additives (cleansing, degreasing, polishing, abrasive and protection agents) which are fed into the processing bowls.

The vibratory finishing has therefore become a high precision step, applicable also to delicate parts or to parts of high intrinsic value, with extremely low running costs.

Despite the fact that the water and additive amounts used for the above cited types of treatments are substantially low, they represent a serious echological problem because they contain substances having very different chemical compositions and which cannot be freely discharged in the sewer system because they are polluting.

The problem is particularly strong in the case of limited productions, which make expensive the installation of a purification plant for small amounts of weste waters having very different compositions between depending on their previous use.

To obviate the above difficulties, the Applicant tried to realize a simple machine with a low capacity but ensuring the solution of the problem.

It is known that the production of wine, beer, sugar syrup and similar products develops large amounts of aqueous solutions of the desired products.

Said solutions have a small degree of turbidity owing to the presence of small amounts of water insoluble products.

Therefore, it is necessary to clarify the solutions under work and the clarification process is carried out by filtering and eliminating all insoluble products.

The filtration is carried out through a layer of filtering earth adhering to a cloth covering the external surface of a rotating drum, the internal part of which is under vacuum.

This type of treatment allows to clarify working solutions while the filtering earth keep all present solid impurities.

Said process is used to treat waters containing a small percentage of solid residue, much less than 1% by weight, an amount which is essentially constant for each type of product under work.

These characteristics of the turbid suspensions to be treated allow to charge the filtering earth in the morning, to work all day long and to discharge the exhausted filtering earth at the end of the working day, by means of a simple stop of the vacuum, with the consequent lost of adhesion of the earth to the filtering surface.

The disclosed machine and the relevant process are not suitable to solve the problem of clarifing waters having a high and variable content of solid impurities.

A further limiting characteristic of this type of machine resides in the fact that it cannot be stopped during the working day to avoid the loss of the adhesion of the filtering layer to the surface of the filter with the consequent separation from the same.

If the filtering drum is stopped by any reason, may be for a few minutes, it is necessary to start again the preparation of the filtering earthy layer before restoring the filtration of the material to be treated.

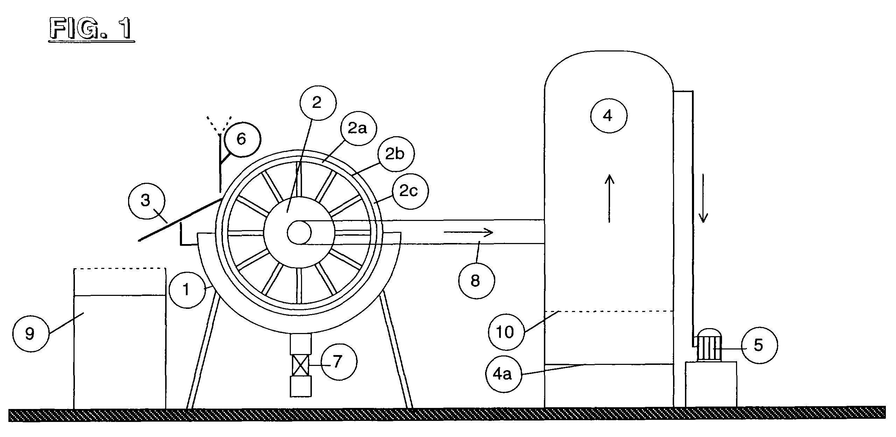

The device according to the present invention solves all above mentioned inconvenients and offers further advantages not obtainable with other types of machines, as it will appear from the following detailed description of the device according to the invention with particular reference to the attached drawing, in which
- figure 1 shows a schematic vertical section of the filtering device according to the invention.

The invention filtering device consists of a rotating drum (2) the lower part of which is plunged into the suspension to be treated which is conveyed into the tank (1), its upper part being in contact with a blade (3) scraping and discharging in the container (9) the enriched portion of filtered residue of the layer of the filtering earth (2c) deposited on the filtering cloth (2b) supported by the grid (2a) of said rotating drum (2) characterised by the fact that the amount of said enriched part of the layer (2c) removed by the blade (3) is controlled by a capacitative detector (10) indicating the level (4a) of the filtered water in the column (4) so to keep it to the desired value, while the thickness and the uniformity of the said layer (2c) of the filtering earth are controlled by the sensor fitted on the pendulum device (6).

The sensor of the pendulum device (6) also provides to stop the filtration when the thickness of the filtering earth (2c) reaches the minimum prefixed value to maintain in the best conditions the filter activity, providing to open the rapid empty device (7) of the tank (1) for its rapid empty, in a time lower than 5 minutes.

The rapid empty device (7) automatically runs if the filtering drum (2) suddenly stops, so avoiding the lost of cohesion of the filtering earth layer (2c) and its consequent fall in the tank (1).

It was observed that the empty rapidity of the aqueous solution present in the tank (1) is essential to avoid the lost of cohesion of the filtering layer.

According to the invention, the construction characteristics of the disclosed device allow to keep filtering capacity at controlled and predetermined values also when very different concentrations and types of suspension are used.

It is so possible to filter turbid suspensions having a very high (also higher than 20% by weight) or very different contents of said solids.

As it is easy understandable, the filtering capacity of the invention device depends on its dimensions and on the percentage of impurities in the turbid to be treated.

For said operations, the more suitable devices have a filtering cylinder diameter between 400 and 1000 cm and a filtering capacity between 300 and 900 lt/h of turbids to be treated.

The scraper blade (3) eliminates a variable layer of the filtering earth (2c) deposited on the surface of the filtering cloth (2b) depending on the solid amount of the treated suspension.

The very high flessibility of the behaviour of the invention device allows the treatment of any type of turbids.

This characteristic of the invention device allows to add coal dust to the suspension to be filtered in an amount of from 0,1% to 2% by weight on its solid content.

The coal dust absorbs the materials, particularly the possibly present surface-active agents having a high C.O.D. value, allowing their relevant reduction during the same filtering operation.

## Claims

1. Filtering device for the purification of turbid water consisting of a rotating drum (2) the lower part of which is plunged into the suspension to be treated which is conveyed into the tank (1), its upper part being in contact with a blade (3) scraping and discharging in the container (9) the enriched portion of filtered residue of the layer of the filtering earth (2c) deposited on the filtering cloth (2b) supported by the grid (2a) of said rotating drum (2) characterized by the fact that the amount of said enriched part of the layer (2c) removed by the blade (3) is controlled by a capacitative detector (10) indicating the level (4a) of the filtered water in the column (4) so to keep it to the desired value, while the thickness and the uniformity of the said layer (2c) of the filtering earth are controlled by the sensor fitted on the pendulum device (6).

2. Filtering device as per claim 1. characterized by the fact that the sensor of the pendulum device (6) provides to stop the filtration when the thickness of the filtering earth (2c) reaches the prefixed value.

3. Filtering device as per claim 1. characterized by the fact that when the rotating drum (2) stops the sensor of the pendulum device (6) provides to open the rapid empty device (7) of the tank (1).

4. Filtering device as per claim 1. characterized by the fact that the scraping blade (3) eliminates a variable layer of filtering earth (2c) depending on the amount of solid residue of the treated suspension.

5. Filtering device as per claim 1. characterized by the fact that it is fed with a turbid added with from 0,1% to 2% by weight of coal dust.
